# EUROPEAN PATENT APPLICATION

(11) **EP 4 282 681 A1**
(43) Date of publication of application: **29.11.2023**
(21) Application number: 22742489.2
(22) Date of filing: 13.01.2022
(51) Int. Cl.: B60K 1/04, B60L 3/00, B60L 50/64, H01M 50/229, H01M 50/249, H01M 50/28, H01M 50/293

(54) **BATTERY PACK CASE AND BATTERY PACK**

(30) Priority: 19.01.2021 JP 2021006442
(71) Applicant: Mitsui Chemicals, Inc., Tokyo 104-0028 (JP)
(72) Inventor: SUGIHARA, Yuri, Sodegaura-shi, Chiba 299-0265 (JP); TANAKA, Hideaki, Sodegaura-shi, Chiba 299-0265 (JP)
(74) Representative: J A Kemp LLP
(86) International application number: PCT/JP2022/000920
(87) International publication number: WO 2022/158367

(57) **Abstract**

A battery pack case which is used for forming a battery pack that is mounted at an electric vehicle, the battery pack case comprising: a tray that is attached to a body of an electric vehicle; a battery-holding member for holding a battery, the battery-holding member being attached onto at least a part of the tray; and a cover that covers the tray and the battery-holding member from above, wherein at least two of the tray, the battery-holding member, or the cover contain a fiber-reinforced plastic.

## Description

### Technical Field

The present disclosure relates to a battery pack case and a battery pack, and more particularly to a battery pack case used to form a battery pack mounted at an electric vehicle and a battery pack mounted at an electric vehicle.

### Background Art

In recent years, various studies have been made on battery pack cases used to form battery packs to be mounted at electric vehicles, and battery packs to be mounted at electric vehicles.

For example, the following Patent Document 1 discloses:
A battery pack case assembly for an electric vehicle that is configured to include a case body in which a battery pack is accommodated and a cover which is assembled to the case body,
which is characterized in that the case body consists of a plastic composite material in which long fibers or a mixture of long fibers and continuous fibers are used as reinforcing fibers in a plastic base material, and
a separate reinforcing member consisting of a plastic composite material that uses long fibers, continuous fibers, or a mixture of long fibers and continuous fibers is joined to the plastic base material on both side brackets for fastening a vehicle car body in the case body.
Patent Document 1 describes that according to the battery pack case assembly for an electric vehicle, a lightweight plastic composite material is used as the material of the case to reduce weight and improve rigidity, collision characteristics, and dimensional stability at the same time.

Patent Document 1: Japanese Patent Application Laid-Open (JP-A) No. 2013-201112

### SUMMARY OF INVENTION

### Technical Problem

However, in some cases, it is required to further suppress damage to a battery in a battery pack in an electric vehicle during a collision.

Meanwhile, in some cases, it is also required to reduce the weight of a battery pack.

An object of one aspect of the disclosure is to provide a lightweight battery pack capable of suppressing battery damage in the event of electric vehicle collision, and a battery pack case capable of forming the battery pack.

### Solution to Problem

The solution to solve the above-described problems includes the following aspects.
<1> A battery pack case which is used for forming a battery pack that is mounted at an electric vehicle, the battery pack case comprising:
   a tray that is attached to a body of an electric vehicle;
   a battery-holding member for holding a battery, the battery-holding member being attached onto at least a part of the tray; and
   a cover that covers the tray and the battery-holding member from above,
   wherein at least two of the tray, the battery-holding member, or the cover contain a fiber-reinforced plastic.
<2> The battery pack case according to <1>, further comprising a cover-reinforcing member for reinforcing at least a part of the cover, the cover-reinforcing member being a metal plate or a fiber-reinforced tape.
<3> The battery pack case according to <2>, wherein:
   the tray includes a tray rear portion that is arranged under a rear seat of the electric vehicle and an tray extending portion that extends in a vehicle body front direction from the tray rear portion and has a length in a vehicle body width direction that is shorter than that of the tray rear portion,
   the battery-holding member includes a battery-holding member R that is attached onto at least a part of the tray rear portion,
   the cover includes a cover rear portion that covers the tray rear portion and the battery-holding member R from above and a cover extending portion that covers at least the tray extending portion from above, and
   the cover-reinforcing member includes a cover rear portion-reinforcing member that reinforces a connecting portion of the cover rear portion that connects with the cover extending portion.
<4> The battery pack case according to <3>, wherein the tray:
   further includes a tray front portion that is connected to a vehicle-body-front-side end of the tray extending portion and is arranged under a front seat of the electric vehicle, and
   further comprises a tray front portion-reinforcing member that is a metal member or a fiber-reinforced tape for reinforcing a rim portion of the tray front portion.
<5> The battery pack case according to <3> or <4>, wherein:
   the battery-holding member includes a battery-holding member M that is attached onto at least a part of the tray extending portion,
   the cover extending portion covers the tray extending portion and the battery-holding member M from above, and
   the cover-reinforcing member includes a cover extending portion-reinforcing member that reinforces at least a part of an area of the cover extending portion which covers the battery-holding member M from above.
<6> The battery pack case according to <3>, further comprising a tray extending portion-reinforcing member that reinforce a part, in a vehicle body longitudinal direction, of the tray extending portion, the part being an area from one end to another end in the vehicle body width direction, and that is a metal plate,
   wherein at least a part of the tray extending portion-reinforcing member is embedded in the tray extending portion.
<7> The battery pack case according to any one of <1> to <6>, wherein at least one of the tray or the cover includes a fiber-reinforced plastic containing two or more fibers selected from the group consisting of glass fiber, aramid fiber, carbon fiber, ZYLON (registered trademark) fiber, polyethylene fiber, and boron fiber.
<8> The battery pack case according to any one of <1> to <7>, wherein
   the battery-holding member is a battery-module-holding member that holds a battery module in which a plurality of lithium secondary batteries are disposed one on another in layers in a thickness direction of the plurality of lithium secondary batteries,
   the battery-module-holding member includes:
      a pair of end plates for sandwiching the battery module from outer sides of both ends in the thickness direction in the battery module; and
      a pair of side plates for sandwiching the battery module from outer sides of both ends in a direction perpendicular to the thickness direction in the battery module and to a vertical direction, and
   the pair of end plates and the pair of side plates contain the fiber-reinforced plastic.
<9> The battery pack case according to <8>, wherein each of the pair of end plates is a plate-like member having a structure in which a metal member is embedded in the fiber-reinforced plastic.
<10> The battery pack case according to <8> or <9>, which further includes a shock-absorbing layer that is arranged at at least one of a position between the pair of end plates and the battery module or a position between the battery module and the tray.
<11> A battery pack which is mounted at an electric vehicle, the battery pack comprising:
   the battery pack case according to any one of <1> to <10>; and
   a battery that is held by the battery-holding member in the battery pack case.

### Advantageous Effects of Invention

According to one aspect of the disclosure, a lightweight battery pack capable of suppressing battery damage in an electric vehicle during a collision, and a battery pack case capable of forming the battery pack are provided.

### BRIEF DESCRIPTION OF DRAWINGS

FIG. 1 is a schematic perspective view of a vehicle body of an electric vehicle on which a battery pack according to one embodiment of the disclosure is mounted.
FIG. 2 is a schematic perspective view of a battery pack according to one embodiment of the disclosure.
FIG. 3 is an exploded perspective view conceptually showing a state in which the cover 12 is removed from the tray 14 in the battery pack.
FIG. 4 is a schematic perspective view of a battery pack according to one embodiment of the disclosure with a cover indicated by dotted lines.
FIG. 5 is a schematic bottom view of a battery pack according to one embodiment of the disclosure.
FIG. 6 is a schematic perspective view of a tray rear portion and battery-holding members attached onto the tray rear portion in a battery pack, according to one embodiment of the disclosure.
FIG. 7 is a schematic perspective view showing a state where the battery-holding members in FIG. 6 hold battery modules.
FIG. 8 is a schematic perspective view showing an end plate that constitutes part of a battery-holding portion in a battery pack according to one embodiment of the disclosure.

### DESCRIPTION OF EMBODIMENTS

As used herein, a numerical range represented by "to" means a range including the numerical values before and after "to" as lower and upper limits.

As used herein, in a case in which there are a plurality of substances corresponding to each component in the composition, the amount of each component in the composition refers to the total amount of the plurality of substances present in the composition unless otherwise specified.

### [Battery Pack Case]

The battery pack case of the disclosure is a battery pack case which is used for forming a battery pack that is mounted at an electric vehicle, the battery pack case comprising:
a tray that is attached to a body of an electric vehicle;
a battery-holding member for holding a battery, the battery-holding member being attached onto at least a part of the tray; and
a cover that covers the tray and the battery-holding member from above,
wherein at least two of the tray, the battery-holding member, or the cover contain a fiber-reinforced plastic.

As a result of intensive studies, the present inventors found that it is possible to achieve reducing the weight of a battery pack and suppressing battery damage in an electric vehicle during a collision in an effective manner with a battery pack case comprising a tray, a battery-holding member, and a cover by allowing at least two of the tray, the battery-holding member, and the cover to contain a fiber-reinforced plastic. Based on such findings, the inventors found the battery pack case of the disclosure.

In other words, according to the battery pack case of the disclosure, a battery pack capable of further suppressing battery damage in an electric vehicle during a collision, which is a lightweight battery pack, can be formed.

A battery pack formed using the battery pack case of the disclosure exerts an excellent effect of suppressing battery damage even during a side collision of an electric vehicle.

In particular, the side collision test in the Examples described later is a new standard evaluation test established in June 2018 by the Ministry of Land, Infrastructure, Transport and Tourism of Japan (Occupant Protection Standards for Side Collisions with Utility Poles, or the Like). A battery pack formed using the battery pack case of the disclosure exerts excellent effects of suppressing battery damage also in the side collision test which is such a new standard evaluation test (see the Examples described later).

It is preferable that the battery pack case of the disclosure further comprises a cover-reinforcing member that reinforces at least a part of the cover. By this, battery damage in an electric vehicle during a collision can be more effectively suppressed.

It is more preferable that the cover-reinforcing member is a metal plate or a fiber-reinforced tape.

The tray in the battery pack case can include:
a tray rear portion that is arranged under a rear seat of the electric vehicle; and
an tray extending portion that extends in a vehicle body front direction from the tray rear portion and has a length in a vehicle body width direction shorter than that of the tray rear portion.

In this aspect (herein after referred to as "aspect A"), a tray rear portion having a large surface area can be arranged in an area under a rear seat having a large surface area in an electric vehicle floor (floor panel), and a battery-holding member having a large surface area can be arranged on the tray rear portion. Therefore, according to the aspect A described above, the amount (volume) of batteries that can be accommodated in the battery pack is increased.

The battery-holding member that is attached onto the tray rear portion is sometimes referred to as "battery-holding member R."

Here, the tray rear portion and the tray extending portion are not necessarily formed as separate members, and they may be formed as an integrally molded member.

A tray including a tray rear portion, an tray extending portion, and a tray front portion described later may also be formed as an integrally molded member.

The same applies to a cover including a cover rear portion and a cover extending portion and a cover including a cover rear portion, a cover extending portion, and a cover front portion described later.

In the aspect A described above, the battery-holding member may be attached onto not only the tray rear portion but also the tray extending portion. The battery-holding member that is attached onto the tray extending portion is hereinafter sometimes referred to as "battery-holding member M."

In the aspect A described above, the tray may further include a tray front portion that is connected to a vehicle-body-front-side end in the tray extending portion. It is preferable that the tray front portion is arranged under the front seat of an electric vehicle.

In a case in which the tray includes the tray front portion, the battery-holding member may be attached onto not only the tray rear portion but also the tray front portion. The battery-holding member that is attached onto the tray front portion is hereinafter sometimes referred to as "battery-holding member F."

It is preferable that in a case in which the battery pack case comprises the cover-reinforcing member, wherein:
the tray includes a tray rear portion that is arranged under a rear seat of the electric vehicle and an tray extending portion that extends in a vehicle body front direction from the tray rear portion and has a length in a vehicle body width direction that is shorter than that of the tray rear portion,
the battery-holding member includes a battery-holding member R that is attached onto at least a part of the tray rear portion,
the cover includes a cover rear portion that covers the tray rear portion and the battery-holding member R from above and a cover extending portion that covers at least the tray extending portion from above, and
the cover-reinforcing member includes a cover rear portion-reinforcing member that reinforces a connecting portion of the cover rear portion that connects with the cover extending portion.

In a case in which the tray includes the tray rear portion and the tray extending portion, the battery-holding member includes the battery-holding member R, and the cover includes the cover rear portion and the cover extending portion, when the cover-reinforcing member includes a cover rear portion-reinforcing member, battery damage in an electric vehicle during a collision (in particular, a side collision) is effectively suppressed.

In the battery pack case in a case in which the tray includes the tray rear portion and the tray extending portion (preferably the battery pack case comprising the cover rear portion-reinforcing member),
the tray may further include a tray front portion that is connected to a vehicle-body-front-side end of the tray extending portion and is arranged under a front seat of the electric vehicle.

It is preferable that the battery pack case in this case further comprises a tray front portion-reinforcing member that is a metal member or a fiber-reinforced tape for reinforcing a rim portion of the tray front portion. By this, battery damage in an electric vehicle during a collision can be more effectively suppressed.

In a case in which the battery pack case comprises the cover rear portion-reinforcing member, it is preferable that
the battery-holding member includes a battery-holding member M that is attached onto at least a part of the tray extending portion,
the cover extending portion covers the tray extending portion and the battery-holding member M from above, and
the cover-reinforcing member includes a cover extending portion-reinforcing member that reinforces at least a part of an area of the cover extending portion which covers the battery-holding member M from above.

In a case in which the case the cover-reinforcing member includes the cover extending portion-reinforcing member, battery damage in an electric vehicle during a collision can be more effectively suppressed.

It is preferable that the battery pack case further comprises an tray extending portion-reinforcing member that reinforce a part in a vehicle body longitudinal direction of the tray extending portion, the part being an area from one end to another end in a vehicle body width direction, and that is a metal plate. In a case in which the battery pack case comprises the tray extending portion-reinforcing member, battery damage in an electric vehicle during a collision (in particular, a side collision) is more effectively suppressed.

It is preferable that at least a part of the tray extending portion-reinforcing member is embedded in the tray extending portion.

It is preferable that the battery-holding member in the battery pack case is a battery-module-holding member that holds a battery module in which a plurality of lithium secondary batteries are disposed one on another in layers in a thickness direction of the plurality of lithium secondary batteries,

It is preferable that the battery-module-holding member includes:
a pair of end plates for sandwiching the battery module from outer sides of both ends in the thickness direction (i.e., the thickness direction of a plurality of lithium secondary batteries (i.e., the layered direction)) of the battery module; and
a pair of side plates for sandwiching the battery module from outer sides of both ends in a direction perpendicular to the thickness direction of the battery module and to a vertical direction.

It is preferable that the pair of end plates and the pair of side plates contain a fiber-reinforced plastic.

By this, the effect of reducing the weight of a battery pack and the effect of suppressing battery damage during a collision can be exerted more effectively.

It is preferable that the pair of end plates is a plate-like member having a structure in which a metal member is embedded in a fiber-reinforced plastic.

By this, the effect of suppressing battery damage during a collision and the effect of reducing the weight can be exerted more effectively.

The battery pack case further comprises a shock-absorbing layer that is arranged at at least one of a position between the pair of end plates and the battery module or a position between the battery module and the tray.

By this, the effect of suppressing battery damage during a collision can be exerted more effectively.

In the battery pack case, it is preferable that the tray and the cover are joined directly or through a joining member. By this, water, dust, or the like can be prevented from entering the battery pack, and deterioration of the battery can be prevented.

From the viewpoint of obtaining the above-described effect more effectively, it is more preferable that the tray and the cover are joined via a sealing member (e.g., a gasket) as a joining member.

It is preferable that the sealing member is integrated with the tray or cover. This makes it possible to reduce the number of parts, thereby allowing the structure of the battery pack case to be simplified.

### [Battery Pack]

The battery pack of the disclosure is a battery pack that is mounted at an electric vehicle, which comprises:
the battery pack case of the disclosure; and
a battery that is held by the battery-holding member in the battery pack case.

According to the battery pack of the disclosure, the same effects as those obtained by the battery pack case of the disclosure can be exerted.

It is preferable that the battery pack of the disclosure comprises a battery module including a plurality of batteries.

In this case, the battery-holding member is preferably a battery-module-holding member that holds the battery module.

A preferred embodiment of the battery module is as described in the section "Battery Pack Case."

In addition, it is preferable that the battery module including a plurality of batteries is a battery module in which a plurality of lithium secondary batteries are disposed one on another in layers in a thickness direction of the plurality of lithium secondary batteries.

Each of the plurality of lithium secondary batteries may be a layered-type lithium secondary battery in which electrodes (positive and negative electrodes) are disposed one on another in layers, or a wound-type lithium secondary battery in which electrodes (positive and negative electrodes) are wound.

For battery modules, see, publicly known literature, for example, Japanese Patent Nos. 6751570 and 6645500, if appropriate.

The battery pack of the disclosure can be formed by allowing the battery pack case of the disclosure to hold a battery (preferably battery module).

In a case in which the batteries in the formed battery pack were repeatedly charged and discharged, and the batteries deteriorated, the batteries in the battery pack may be replaced. In other words, a deteriorated battery may be removed from the battery pack case in the battery pack, and a new battery may be held therein.

### [Embodiment]

Hereinafter, an embodiment of the battery pack of the disclosure will be described with reference to the drawings, and in the description, an embodiment of the battery pack case of the disclosure will also be described. The embodiment of the battery pack case of the disclosure is achieved by removing a battery from a battery pack according to the following embodiment.

The battery pack and battery pack case of the disclosure are not limited to the following embodiment.

Elements common to each drawing are denoted by the same reference numerals, and redundant description may be omitted.

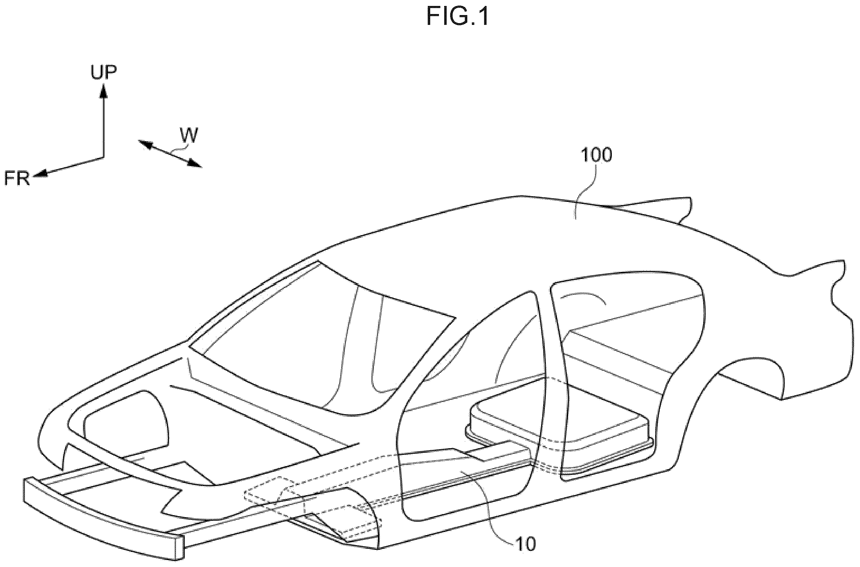

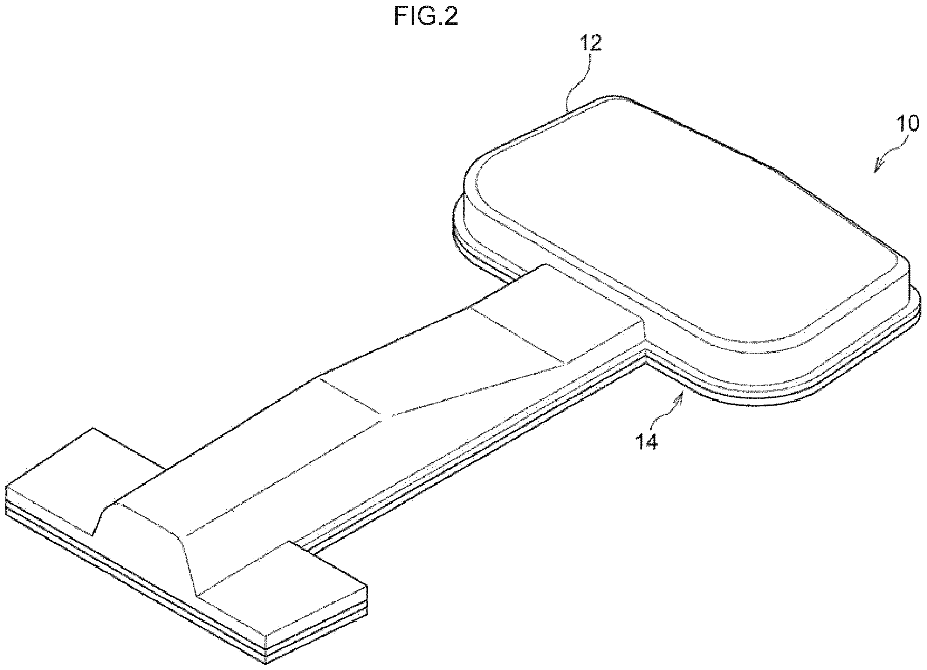

FIG. 1 is a schematic perspective view of a vehicle body of an electric vehicle on which a battery pack according to this embodiment is mounted. FIG. 2 is a schematic perspective view of a battery pack according to this embodiment.

As shown in FIGS. 1 and 2, a battery pack 10 according to this embodiment is mounted in a vehicle body 100 of an electric vehicle. The battery pack 10 is a battery pack in which a battery module is accommodated in a battery pack case including a tray 14 and a cover 12.

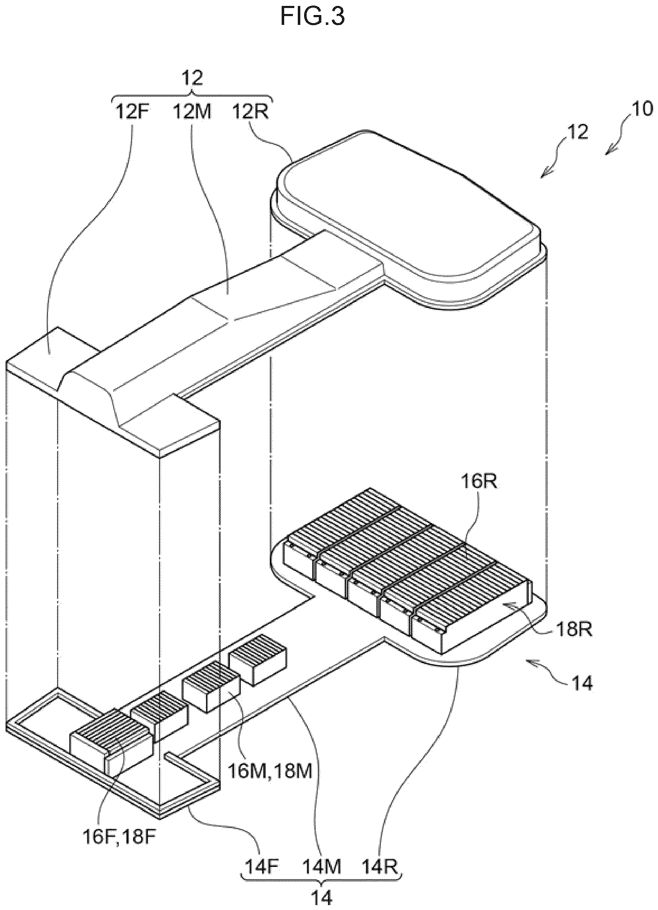

FIG. 3 is an exploded perspective view conceptually showing a state in which the cover 12 is removed from the tray 14 in the battery pack.

As shown in FIGS. 2 and 3, the battery pack case that forms the battery pack 10 comprises:
the tray 14 which is attached on to the vehicle body 100 of an electric vehicle;
battery-holding members (18F, 18M, 18R) which are attached onto at least a part of the tray 14 and hold batteries; and
the cover 12 which covers the tray 14 and the battery-holding members from above.

The battery pack 10 is a battery pack in which batteries (specifically, battery module 16F, battery module 16M, and battery module 16R described later) are held by the battery-holding members in the battery pack case.

A sealing member (such as a gasket; not shown) is interposed at a joining portion between the tray 14 and the cover 12 in the battery pack 10. By this, the battery pack is sealed such that water, dust, or the like can be prevented from entering the battery pack. The sealing member is integrated with the tray or cover.

The tray 14 includes a tray rear portion 14R, an tray extending portion 14M, and a tray front portion 14F.

The tray rear portion 14R is arranged under a rear seat of the electric vehicle.

The tray extending portion 14M is a portion that extends from the tray rear portion 14R in the vehicle body front direction (the direction of the arrow FR in FIG. 1; the same applies hereinafter). This tray extending portion 14M is a member that has a length in the vehicle body width direction (the direction of the arrow W in FIG. 1) shorter than that of the tray rear portion 14R.

The tray front portion 14F is connected to a vehicle-body-front-side end of the tray extending portion 14M. The tray front portion 14F is arranged under a front seat of the electric vehicle.

The battery-holding member 18R for holding the battery module 16R is attached onto the tray rear portion 14R.

The battery-holding member 18M for holding the battery module 16M is attached onto the tray extending portion 14M.

The battery-holding member 18F for holding the battery module 16F is attached onto the tray front portion 14F.

The battery-holding members 18R, 18M, and 18F are members that hold the battery modules 16R, 16M, and 16F, respectively.

Each of the battery modules 16R, 16M, and 16F is a battery module in which a plurality of lithium secondary batteries are disposed one on another in layers in a thickness direction of the plurality of lithium secondary batteries.

Detailed structures of the battery-holding members 18R, 18M, and 18F will be described later.

The cover 12 includes a cover rear portion 12R, a cover extending portion 12M, and a cover front portion 12F.

The cover rear portion 12R is a portion of the cover 12 which covers the tray rear portion 14R, the battery-holding member 18R, and the battery module 16R.

The cover extending portion 12M is a portion of the cover 12 which covers the tray extending portion 14M, the battery-holding member 18M, and the battery module 16M.

The cover front portion 12F is a portion of the cover 12 which covers the tray front portion 14F, the battery-holding member 18F, and the battery module 16F.

In the battery pack 10, at least two of the tray, the battery-holding members, and the cover (i.e., a combination of the tray and the battery-holding members, a combination of the battery-holding members and the cover, a combination of the tray and the cover, or the combination of the tray, the battery-holding members, and the cover) contain a fiber-reinforced plastic.

By this, reduction of the weight of a battery pack and suppression of battery damage in an electric vehicle during a collision can be achieved effectively.

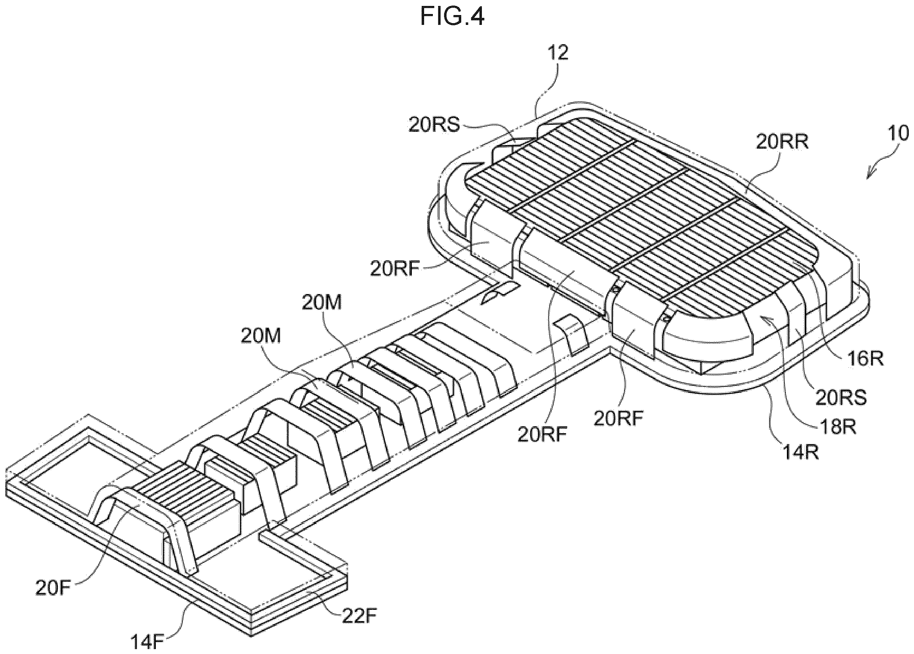

FIG. 4 is a schematic perspective view of a battery pack according to this embodiment in a case in which the cover 12 is indicated by dotted lines. FIG. 4 corresponds to FIG. 2.

In FIG. 4, the cover 12 is indicated by dotted lines for better visibility of cover-reinforcing members (i.e., cover rear portion-reinforcing member 20RF, cover rear portion-reinforcing member 20RS, cover rear portion-reinforcing member 20RR, cover extending portion-reinforcing member 20M, and cover front portion-reinforcing member 20F).

As shown in FIG. 4, when the cover is put on the tray, each of the cover-reinforcing members for reinforcing the cover is in a state of covering at least a part of the relevant battery module on the tray. As these cover-reinforcing members protect at least a part of the battery modules on the tray, battery damage during a collision is effectively suppressed.

In fact, each cover-reinforcing member is attached to the inner wall of the cover 12 or embedded in the cover 12 such that it reinforces part of the cover (the part covering the relevant battery).

It is preferable that each of the cover-reinforcing members is a metal plate or fiber-reinforced tape.

It is preferable that a cover-reinforcing member in an aspect in which it is a fiber-reinforced tape is attached to the inner wall of the cover 12.

A cover-reinforcing member in an aspect in which it is a metal plate may be attached to the inner wall of the cover 12 or may be embedded in the cover 12.

The cover-reinforcing members include a cover rear portion-reinforcing member 20RF, a cover rear portion-reinforcing member 20RS, a cover rear portion-reinforcing member 20RR, a cover extending portion-reinforcing member 20M, and a cover front portion-reinforcing member 20F.

The cover rear portion-reinforcing member 20RF is a member that reinforces a connecting portion between the cover rear portion 12R and at least the cover extending portion 12M (in other words, a vehicle front portion of the cover rear portion 12R).

The cover rear portion-reinforcing member 20RS is a member that reinforces both ends of the cover rear portion 12R in the vehicle body width direction.

The cover rear portion-reinforcing member 20RR is a member that reinforces a vehicle rear portion of the cover rear portion 12R.

The cover extending portion-reinforcing member 20M is a member that reinforces the cover extending portion 12M.

The cover front portion-reinforcing member 20F is a member that reinforces the cover front portion 12F.

As stated above, each of the cover-reinforcing members contributes to suppressing damage in a battery during a collision. Among them, the cover rear portion-reinforcing member 20RF that reinforces a connecting portion of the cover rear portion 12R that connects with the cover extending portion 12M has a significant effect of suppressing damage in a battery during a collision (in particular, a side collision).

The battery pack 10 further comprises a tray front portion-reinforcing member 22F that reinforces a rim portion of the tray front portion 14F. By this, damage in a battery arranged on the tray front portion during a collision is further suppressed.

It is preferable that the tray front portion-reinforcing member 22F is a metal member or fiber-reinforced tape.

At least a part of the tray front portion-reinforcing member 22F in an aspect in which it is a metal member may be embedded in the tray front portion 14F.

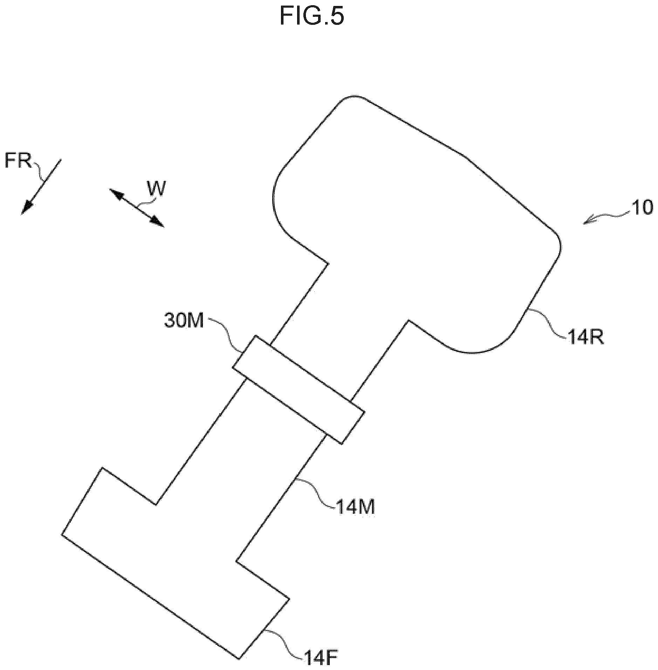

FIG. 5 is a schematic bottom view of the battery pack 10 (i.e., a schematic bottom view of the tray).

The battery pack 10 comprises an tray extending portion-reinforcing member 30M that is embedded in the lower surface side of the tray extending portion 14M.

The tray extending portion-reinforcing member 30M is part of the tray extending portion 14M in a vehicle body longitudinal direction and reinforces an area from one end to another end of the tray extending portion in a vehicle body width direction. By this, the significant effect of suppressing battery damage during a collision (in particular, a side collision) can be obtained.

It is preferable that the tray extending portion-reinforcing member 30M is a metal plate.

Next, the structures of the battery-holding member 18R and the battery module 16R will be described.

The structure of each of the battery-holding member 18M and the battery-holding member 18F is similar to that of the battery-holding member 18R, and the structure of each of the battery module 16M and the battery module 16F is similar to the battery module 16R.

As shown in FIGS. 3 and 4, the battery-holding member 18R is a battery-module-holding member that holds the battery module 16R in which a plurality of lithium secondary batteries are disposed one on another in layers in a thickness direction of the plurality of lithium secondary batteries.

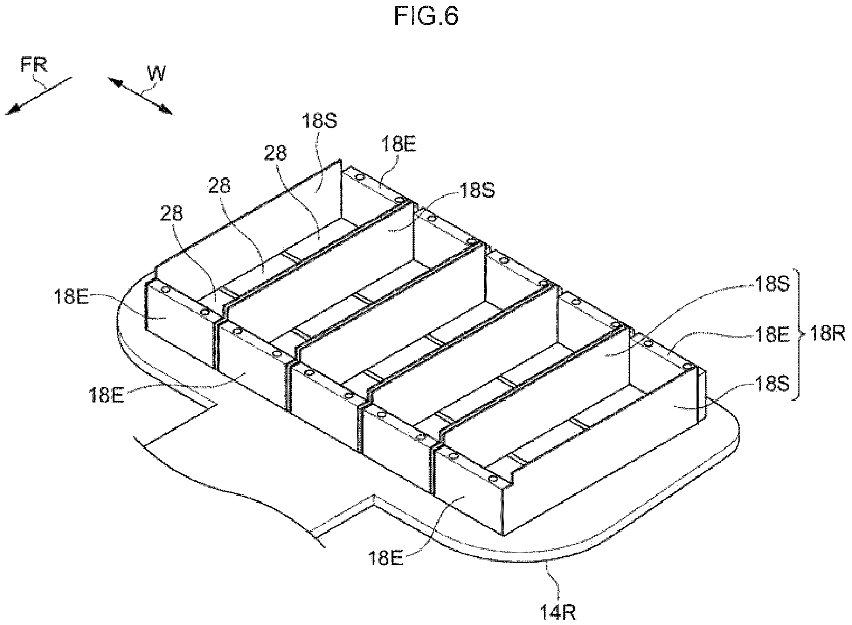

FIG. 6 is a schematic perspective view of a tray rear portion and battery-holding members attached onto the tray rear portion. FIG. 6 shows a view in which the battery module 16R is removed on the tray rear portion 14 in FIGS. 3 and 4 to make the configuration of the battery-holding member easier to see.

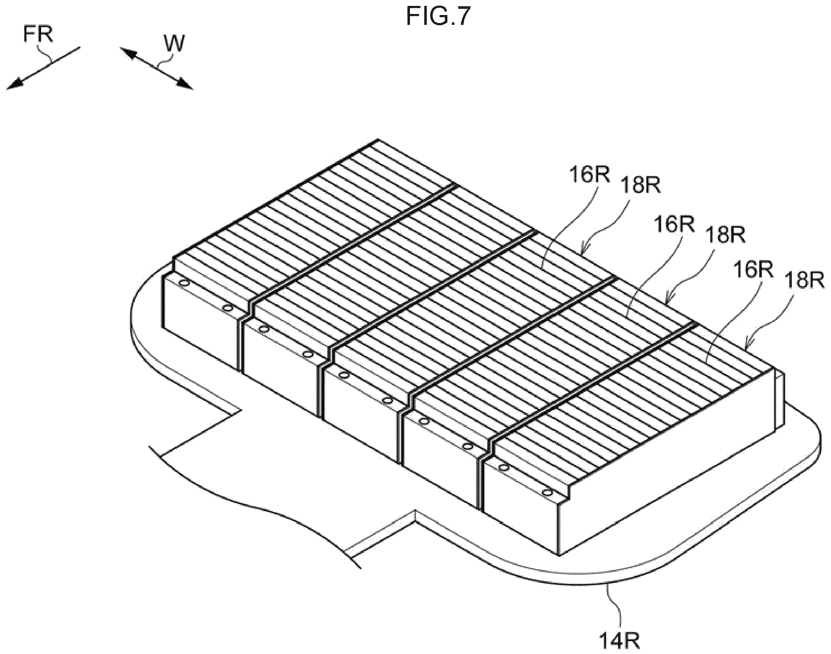

FIG. 7 is a schematic perspective view showing a state where the battery-holding members in FIG. 6 hold battery modules. FIG. 7 corresponds to an enlarged view of the tray rear portion side of the battery pack 10 in FIG. 3.

As shown in FIGS. 6 and 7, a battery-holding member 18R, which is a battery-module-holding member, includes a pair of end plates 18E and a pair of side plates 18S.

The pair of end plates 18E sandwich a battery module 16R from outer sides of both ends of the battery module 16R in the thickness direction of a plurality of a plurality of lithium secondary batteries (i.e., a layered direction in which a plurality of lithium secondary batteries are disposed one on another in layers). Here, each end plate 18E and each outermost lithium secondary battery may be adjacent to each other, or another layer (e.g., a shock-absorbing layer) may be interposed between each end plate 18E and each outermost lithium secondary battery.

The pair of end plates 18E functions to sandwich the battery module 16R from outer sides of the both ends.

The pair of end plates 18E also functions to suppress swelling of the battery module R due to repeated charge/discharge cycles. The swelling of the battery module R is caused by swelling in the thickness direction of a plurality of lithium secondary batteries.

The pair of end plate 18E may further have other functions such as the shock absorption function.

The pair of side plates 18S sandwiches the battery module 16R from outer sides of both ends of the battery module in a direction (in this example, in the vehicle body width direction) perpendicular to the thickness direction of the plurality of lithium secondary batteries and to a vertical direction.

The pair of side plates 18S functions to sandwich the battery module 16R from outer sides of the both ends. The pair of side plates 18S also functions to suppress lateral displacement of the plurality of lithium secondary batteries in the battery module.

The pair of side plate 18S may have other functions such as the heat dissipation function and the cooling function.

A method of allowing the side plates 18S to have the heat dissipation function can be a method of providing a through hole that penetrates the plate thickness direction of each side plate, or the like.

A method of allowing the side plates 18S to have the cooling function can be a method of embedding a cooling member (e.g., a pipe for circulating a cooling medium) in each side plate, or the like.

As shown in FIGS. 6 and 7, in the battery-holding member 18R, a single frame is formed with the pair of end plates 18E and the pair of side plate 18S, and the battery module is accommodated in the frame. Five such frames are aligned in the vehicle body width direction in the battery-holding member 18R, while neighboring frames share one side plate 18S. In other words, there are six side plates 18S and ten end plates 18E in the battery-holding member 18R.

The number of side plates 18S and the number of end plates 18E (in other words, the number of the above-described frames) can be changed, if appropriate.

As shown in FIG. 6, a shock-absorbing layer 28 is arranged in an area in which the battery module is held on the tray rear portion 14R (under the battery module when the battery module is held). By this, the effect of suppressing battery damage during a collision can be exerted more effectively.

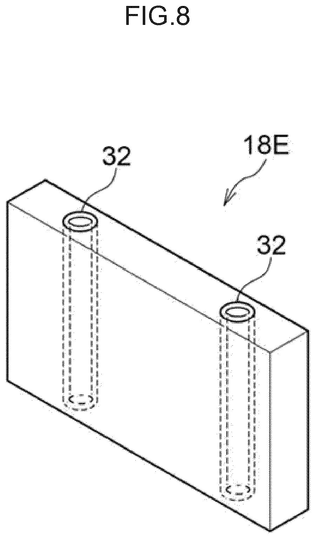

FIG. 8 is a schematic perspective view showing an end plate that constitutes part of a battery-holding portion.

It is preferable that the end plate 18E is a plate-like member having a structure in which a cylindrical metal member 32 is embedded in a fiber-reinforced plastic.

By this, the effect of suppressing battery damage during a collision (the effect of the metal member) and the effect of weight reduction (the effect of the fiber-reinforced plastic as a base) can be exerted more effectively.

In this case, a metal bolt (not shown) may pass through the cylindrical metal member 32.

In addition, the metal member may have a cylinder shape.

### [Embodiment]

Although the embodiments of the battery pack and the battery pack case of the disclosure have been described above, the battery pack and the battery pack case of the disclosure are not limited to the above-described embodiments.

As long as each requirement of the battery pack and the battery pack case of the disclosure is satisfied, various modifications of the above-described embodiments are also within the scope of the battery pack and the battery pack case of the disclosure.

For example, modifications of the battery pack of the above-described embodiment include the examples listed below.

Modification examples include an example in which a battery pack in the above-described embodiment is downsized by omitting tray front portion, battery-holding portion and a battery on the tray front portion, and a cover front portion.

Modification examples also include an example in which a battery-holding member and a battery on an tray extending portion and/or a battery-holding member and a battery on a tray front portion are omitted from a battery pack in the above-described embodiment.

Modification examples further include an example in which, for example, a combination of a rectangular tray, which is not a tray including a tray rear portion and an tray extending portion having different lengths in the vehicle body width direction, and a cover adapted to such shape of the tray is employed.

In summary, as long as the battery pack case of the disclosure comprises a tray, a battery-holding member, and a cover, the shapes of members such as a tray and a cover are not particularly limited.

### [Preferred Materials and Others for Members of Battery Pack Case]

Next, preferred materials and others for the members of the battery pack case of the disclosure will be described.

### <Fiber-reinforced Plastic>

In the battery pack case of the disclosure, at least two of the tray, the battery-holding member, and the cover contain a fiber-reinforced plastic.

By this, the effect of suppressing battery damage during a collision and the effect of reducing the weight of the battery pack case can be realized.

The fiber contained in the fiber-reinforced plastic is not particularly limited as long as it is a fiber contained in an ordinary fiber-reinforced plastic.

From the viewpoint of further suppressing battery damage, it is preferable that the fiber-reinforced plastic contains, as a fiber, at least one type selected from the group consisting of glass fiber, aramid fiber, carbon fiber, ZYLON (registered trademark) fiber, polyethylene fiber, and boron fiber.

In the disclosure, from the viewpoint of still further suppressing battery damage, at least one of the tray or the cover in the battery pack case of the disclosure includes preferably a fiber-reinforced plastic, more preferably a fiber-reinforced plastic containing two or more types of fibers, still more preferably a fiber-reinforced plastic containing two or more fibers selected from the group consisting of glass fiber, aramid fiber, carbon fiber, ZYLON (registered trademark) fiber, polyethylene fiber, and boron fiber.

The fiber content with respect to the total amount of the fiber-reinforced plastic is preferably from 20% by mass to 70% by mass, more preferably from 30% by mass to 60% by mass with respect to the total amount of the fiber-reinforced plastic.

The preferred range of the fiber content with respect to the total amount of members including the fiber-reinforced plastic is also the same as the preferred fiber content with respect to the total amount of the fiber-reinforced plastic.

The resin (i.e., matrix resin) in the fiber-reinforced plastic is not particularly limited, and a known resin can be applied.

Examples of a resin include polypropylene, polyester (i.e., saturated or unsaturated polyester), polyamide, polyetheretherketone, polycarbonate, polyphenylene sulfone, polyphenylene ether, and thermoplastic polyurethane.

The fiber-reinforced plastic may contain only one type of resin, or may contain two or more types thereof.

The resin content with respect to the total amount of the fiber-reinforced plastic is preferably from 30% by mass to 80% by mass, more preferably from 40% by mass to 70% by mass with respect to the total amount of the fiber-reinforced plastic.

The preferred range of the resin content with respect to the total amount of members including the fiber-reinforced plastic is also the same as the preferred resin content with respect to the total amount of the fiber-reinforced plastic.

The fiber-reinforced plastic may contain components (e.g., additives) other than the fiber and resin.

Examples of additives include a flame retardant (preferably a brominated flame retardant).

The flame retardant content with respect to the total amount of the fiber-reinforced plastic is preferably from 10% by mass to 30% by mass, more preferably from 20% by mass to 30% by mass with respect to the total amount of the fiber-reinforced plastic.

The preferred range of the flame retardant content with respect to the total amount of members including the fiber-reinforced plastic is also the same as the preferred flame retardant content with respect to the total amount of the fiber-reinforced plastic.

A member including the fiber-reinforced plastic (e.g., the tray, the battery-holding member, or the cover) can be produced by a known molding method, for example, injection molding, sheet molding compound (SMC) molding, press molding, or extrusion press molding.

### <Reinforcing Member>

As stated above, the battery pack case of the disclosure may comprise reinforcing members (e.g., a cover-reinforcing member and a tray reinforcing member).

The shape of a reinforcing member can be selected, if appropriate, in view of the shape of a member reinforced by the reinforcing member, strength of reinforcement, and the like. Examples of the shape of a reinforcing member include a plate-like shape, a rod-like shape, a cylindrical shape, and a sheet-like shape (e.g., the shape of fiber-reinforced tape).

A preferred reinforcing member is a metal member (e.g., a metal plate or a metal rod) or a fiber-reinforced tape.

The material for the metal member is not particularly limited, and known materials such as aluminum, aluminum alloy, and stainless steel can be applied.

The material for the fiber-reinforced tape is also not particularly limited, and known materials can be applied. Examples of the material for the fiber-reinforced tape include those materials similar to those of the fiber-reinforced plastic mentioned above.

### <Sealing Member>

As stated above, it is preferable that the battery pack case of the disclosure comprises a sealing member (such as a gasket) interposed between the tray and the cover.

It is preferable that the sealing member includes at least one type of thermoplastic elastomer.

Examples of a thermoplastic elastomer include olefin elastomer (e.g., TPO or TPV), styrene elastomer (e.g., SEEPS, SEPS, or SEBS), urethane elastomer, polyvinyl chloride elastomer (e.g., TPVC), polyamide elastomer (e.g., PAER or TPAE), polyester elastomer (e.g., TPEE), acrylic rubber, and ethylene propylene rubber.

### <Shock-Absorbing Layer>

As described above, the battery pack case preferably further comprises a shock-absorbing layer (e.g., shock-absorbing layer 28) arranged at at least one of a position between a pair of end plates and the battery module or a position between the battery module and the tray.

The shock-absorbing layer preferably contains at least one thermoplastic elastomer.

Materials for the shock-absorbing layer include those similar to those for the sealing member described above.

### EXAMPLES

Examples of the disclosure are shown below, but the disclosure is not limited to the following examples. Hereinafter, wt% and weight substantially mean % by mass and mass, respectively.

### [Examples 1 to 40, Comparative Examples 1 to 5]

A simulation was performed for each of the G-impact test in Z axis, weight reduction rate, and side collision test in a case in which materials shown in Tables 1 and 2 are selected as materials for the cover, tray, and battery-holding member was performed on the battery pack 10 (see FIGS. 1 to 5) according to the embodiment described above.

The details of the materials shown in Tables 1 and 2 are as follows.

Al alloy: aluminum alloy (aluminum-silicon system, A4032)
· SMC: SMC molding resin manufactured by Japan Composite Co., LTD. (containing unsaturated polyester resin as matrix resin)
· PP: Polypropylene
· GF: Glass fiber (manufactured by Nitto Boseki Co., Ltd.; fiber diameter: ϕ17 µm; fiber length: 1 mm)
· LGF: Glass fiber (manufactured by Nitto Boseki Co., Ltd.; fiber diameter: ϕ17 µm; fiber length: 8 mm)
· CF: Carbon fiber (manufactured by TEIJIN LIMITED; fiber diameter: ϕ7 µm; fiber length: 1 mm)
· LCF: Carbon fiber (manufactured by TEIJIN LIMITED; fiber diameter: ϕ7 µm; fiber length: 9 mm)
· ARLEN M335: "ARLEN" (registered trademark) M335 (modified polyamide 6T) manufactured by Mitsui Chemicals, Inc.

In Tables 1 and 2, the column of the material for each of the cover, tray, and battery-holding member shows the type of resin and the type and content of fiber (the content of fiber relative to the total content of resin and fiber).

For example, the notation "SMC GF 37 wt% + CF 2 wt%" means that in a case in which the total amount of resin and fiber is 100% by mass, 37% by mass of glass fiber (GF) is contained, and 2% by mass of carbon fiber (CF) is contained, meaning that the remainder is resin (SMC).

As the cover-reinforcing member, a cover-reinforcing member made of the Al alloy described above was used throughout all the Examples.

The simulation was performed under MAT-24 conditions using nonlinear structural analysis software LS-DYNA (manufactured by JSOL CORPORATION).

### -Simulation Conditions-

· Vehicle body weight: 1680 kg
· Total weight of battery: 210 kg
· Weight of battery pack case: 1470 kg (for Comparative Example 1)

The evaluation contents and evaluation criteria for each of the G-impact test in Z axis, weight reduction rate, and side collision test are as follows.

### -Evaluation Contents for G-impact Test in Z axis-

In the G-impact test in Z axis, the rupture of the battery pack case and the effects on the batteries in the battery pack, when an impact with an acceleration of 18 G in the X-axis direction, 15 G in the Y-axis direction, and 25 G in the Z axis direction was applied to an electric vehicle on which a battery pack was mounted, were confirmed and evaluated according to the following evaluation criteria.

In the following evaluation criteria, "A" is the most excellent rank in the effect of suppressing battery damage in an electric vehicle during a collision.

### -Evaluation Criteria for G-impact Test in Z axis-

A: There is no rupture of the battery pack case.
B: The battery pack case is partially ruptured, but the batteries in the battery pack are not affected.
C: At least a part of the battery pack case is ruptured, affecting the batteries in the battery pack.

### -Evaluation Contents for Weight Reduction Rate-

The decrease rate (%) of the total mass of the cover, tray, and battery-holding member of each Example with respect to the total mass of the cover (made of A1 alloy), tray (made of A1 alloy), and battery-holding member (made of A1 alloy) in Comparative Example 1 was obtained. The weight reduction rate of the battery pack case was evaluated according to the following evaluation criteria.

In the following evaluation criteria, "A" is the rank with the most excellent weight reduction rate (i.e., the weight is most reduced).

### -Evaluation Criteria for Weight Reduction Rate-

A: The decrease rate (%) of the total mass of the cover, tray, and battery-holding member was 10% or more.
B: The decrease rate (%) of the total mass of the cover, tray, and battery-holding member was 5% or more and less than 10%.
C: The decrease rate (%) of the total mass of the cover, tray, and battery-holding member was less than 5%.

### -Evaluation Contents of Side Collision Test-

An electric vehicle on which a battery pack was mounted was side-collided against a pole having a diameter of 254 mm at a speed of 32 km/h and a collision angle of 75°. The rupture of the battery pack case and the effects on the batteries in the battery pack were confirmed and evaluated according to the following evaluation criteria.

### -Evaluation Criteria for Side Collision Test-

A: There is no rupture of the battery pack case.
B: The battery pack case is partially ruptured, but the batteries in the battery pack are not affected.
C: At least a part of the battery pack case is ruptured, affecting the batteries in the battery pack.

**[Table 1]**

| | Material of constituent elements of battery pack case | | | Results of battery pack evaluation | | |
|---|---|---|---|---|---|---|
| | Cover | Tray | Battery-holding member | G-impact test in Z axis | Weight reduction rate | Side collision test |
| Comparative Example 1 | Al alloy | Al alloy | Al alloy | A | C | A |
| Comparative Example 2 | SMC GF 37 wt% | Al alloy | Al alloy | A | C | A |
| Comparative Example 3 | PP LGF 50 wt% | Al alloy | Al alloy | A | C | A |
| Comparative Example 4 | Al alloy | SMC GF 37 wt% | Al alloy | A | C | C |
| Comparative Example 5 | Al alloy | PP LGF 50 wt% | Al alloy | A | C | C |
| Example 1 | SMC GF 37 wt% | PP LGF 50 wt% | Al alloy | B | A | B |
| Example 2 | PP LGF 50 wt% | SMC GF 37 wt% | Al alloy | B | A | B |
| Example 3 | SMC GF 37 wt% + CF2 wt% | PP LGF 50 wt% | Al alloy | A | A | A |
| Example 4 | SMC GF 37 wt% + CF 5 wt% | PP LGF 50 wt% | Al alloy | A | A | A |
| Example 5 | SMC GF 37 wt% + CF 10 wt% | PP LGF 50 wt% | Al alloy | A | A | A |
| Example 6 | SMC GF 50 wt% + CF 2 wt% | PP LGF 50 wt% | Al alloy | A | A | A |
| Example 7 | SMC GF 50 wt% + CF 5 wt% | PP LGF 50 wt% | Al alloy | A | A | A |
| Example 8 | SMC GF 50 wt% + CF 10 wt% | PP LGF 50 wt% | Al alloy | A | A | A |
| Example 9 | SMC GF 37 wt% | PP LGF 50 wt% + LCF2 wt% | Al alloy | A | A | A |
| Example 10 | SMC GF 37 wt% | PP LGF 50 wt% + LCF5 wt% | Al alloy | A | A | A |
| Example 11 | SMC GF 37 wt% | PP LGF 50 wt% + LCF10 wt% | Al alloy | A | A | A |
| Example 12 | SMC GF 37 wt% | PP LCF 50 wt% + LGF10 wt% | Al alloy | A | A | A |
| Example 13 | SMC GF 37 wt% | PP LCF 50 wt% + LGF2 wt% | Al alloy | A | A | A |
| Example 14 | PP LGF 50 wt% + LCF 5 wt% | SMC GF 37wt % | Al alloy | A | A | A |
| Example 15 | PP LGF 50 wt% + LCF 10 wt% | SMC GF 37wt % | Al alloy | A | A | A |
| Example 16 | PP LCF 50 wt% + LGF 10 wt% | SMC GF 37wt % | Al alloy | A | A | A |
| Example 17 | PP LCF 50 wt% + LGF 2 wt% | SMC GF 37wt % | Al alloy | A | A | A |
| Example 18 | PP LGF 50 wt% + LCF 5 wt% | SMC GF 50 wt% | Al alloy | A | A | A |
| Example 19 | PP LGF 50 wt% + LCF 10 wt% | SMC GF 50 wt% | Al alloy | A | A | A |
| Example 20 | PP LCF 50 wt% + LGF 10 wt% | SMC GF 50 wt% | Al alloy | A | A | A |
| Example 21 | PP LCF 50 wt% + LGF 2 wt% | SMC GF 50 wt% | Al alloy | A | A | A |

**[Table 2]**

| | Material of constituent elements of battery pack case | | | Results of battery pack evaluation | | |
|---|---|---|---|---|---|---|
| | Cover | Tray | Battery-holding member | G-impact test in Z axis | Weight reduction rate | Side collision test |
| Example 22 | SMC GF 37 wt% | Al alloy | ARLEN M335 GF 35 wt% | B | A | B |
| Example 23 | PP LGF 50 wt% | Al alloy | ARLEN M335 GF 35 wt% | B | A | B |
| Example 24 | SMC GF 50wt % | Al alloy | ARLEN M335 GF 35 wt% | B | A | B |
| Example 25 | SMC GF 37 wt% + CF2 wt% | Al alloy | ARLEN M335 GF 35 wt% | A | A | A |
| Example 26 | SMC GF 37 wt% + CF 5 wt% | Al alloy | ARLEN M335 GF 35 wt% | A | A | A |
| Example 27 | SMC GF 37 wt% + CF 10 wt% | Al alloy | ARLEN M335 GF 35 wt% | A | A | A |
| Example 28 | SMC GF 50 wt% + CF 2 wt% | Al alloy | ARLEN M335 GF 35 wt% | A | A | A |
| Example 29 | SMC GF 50 wt% + CF 5 wt% | Al alloy | ARLEN M335 GF 35 wt% | A | A | A |
| Example 30 | SMC GF 50 wt% + CF 10 wt% | Al alloy | ARLEN M335 GF 35 wt% | A | A | A |
| Example 31 | PP LGF 50 wt% + LCF 5 wt% | Al alloy | ARLEN M335 GF 35 wt% | A | A | A |
| Example 32 | PP LGF 50 wt% + LCF 10 wt% | Al alloy | ARLEN M335 GF 35 wt% | A | A | A |
| Example 33 | PP LCF 50 wt% + LGF 10 wt% | Al alloy | ARLEN M335 GF 35 wt% | A | A | A |
| Example 34 | PP LCF 50 wt% + LGF 2 wt% | Al alloy | ARLEN M335 GF 35 wt% | A | A | A |
| Example 35 | Al alloy | PP LGF 50 wt% + LCF2 wt% | ARLEN M335 GF 35 wt% | A | A | A |
| Example 36 | Al alloy | PP LGF 50 wt% + LCF5 wt% | ARLEN M335 GF 35 wt% | A | A | A |
| Example 37 | Al alloy | PP LGF 50 wt% + LCF10 wt% | ARLEN M335 GF 35 wt% | A | A | A |
| Example 38 | Al alloy | PP LCF 50 wt% + LGF10 wt% | ARLEN M335 GF 35 wt% | A | A | A |
| Example 39 | Al alloy | PP LCF 50 wt% + LGF2 wt% | ARLEN M335 GF 35 wt% | A | A | A |
| Example 40 | Al alloy | SMC GF 50wt % | ARLEN M335 GF 35 wt% | A | A | A |

As shown in Tables 1 and 2, in Examples 1 to 40, which satisfy the condition that at least two of the tray, the battery-holding member, and the cover contain a fiber-reinforced plastic, the weight reduction rate of the battery pack case was more excellent than that in Comparative Examples 1 to 5, which do not satisfy this condition (i.e., the weight of the battery pack case was reduced).

In addition, in Examples 1 to 40, somewhat excellent results in the G-impact test in Z axis and the side collision test were obtained. By this, it was confirmed that battery damage can be suppressed during a collision.

The results of Examples 1 to 40 confirmed that in a case in which at least one of the tray or the cover contains a fiber-reinforced plastic containing two or more types of fibers (Examples 3 to 21 and 25 to 40), the results in the G-impact test in Z axis and the side collision test are improved, i.e., battery damage during a collision (including a side collision) can be effectively suppressed.

The disclosure of Japanese Patent Application No. 2021-006442 filed on January 19, 2021 is incorporated herein by reference in its entirety.

All publications, patent applications, and technical standards mentioned herein are incorporated herein by reference to the same extent as if each publication, patent application, and technical standard were specifically and individually noted to be incorporated by reference.

## Claims

1. A battery pack case which is used for forming a battery pack that is mounted at an electric vehicle, the battery pack case comprising:
a tray that is attached to a body of an electric vehicle;
a battery-holding member for holding a battery, the battery-holding member being attached onto at least a part of the tray; and
a cover that covers the tray and the battery-holding member from above,
wherein at least two of the tray, the battery-holding member, or the cover contain a fiber-reinforced plastic.

2. The battery pack case according to claim 1, further comprising a cover-reinforcing member for reinforcing at least a part of the cover, the cover-reinforcing member being a metal plate or a fiber-reinforced tape.

3. The battery pack case according to claim 2, wherein:
the tray includes a tray rear portion that is arranged under a rear seat of the electric vehicle and an tray extending portion that extends in a vehicle body front direction from the tray rear portion and has a length in a vehicle body width direction that is shorter than that of the tray rear portion,
the battery-holding member includes a battery-holding member R that is attached onto at least a part of the tray rear portion,
the cover includes a cover rear portion that covers the tray rear portion and the battery-holding member R from above and a cover extending portion that covers at least the tray extending portion from above, and
the cover-reinforcing member includes a cover rear portion-reinforcing member that reinforces a connecting portion of the cover rear portion that connects with the cover extending portion.

4. The battery pack case according to claim 3, wherein the tray:
further includes a tray front portion that is connected to a vehicle-body-front-side end of the tray extending portion and is arranged under a front seat of the electric vehicle, and
further comprises a tray front portion-reinforcing member that is a metal member or a fiber-reinforced tape for reinforcing a rim portion of the tray front portion.

5. The battery pack case according to claim 3 or 4, wherein:
the battery-holding member includes a battery-holding member M that is attached onto at least a part of the tray extending portion,
the cover extending portion covers the tray extending portion and the battery-holding member M from above, and
the cover-reinforcing member includes a cover extending portion-reinforcing member that reinforces at least a part of an area of the cover extending portion which covers the battery-holding member M from above.

6. The battery pack case according to claim 3, further comprising a tray extending portion-reinforcing member that reinforce a part, in a vehicle body longitudinal direction, of the tray extending portion, the part being an area from one end to another end in the vehicle body width direction, and that is a metal plate,
wherein at least a part of the tray extending portion-reinforcing member is embedded in the tray extending portion.

7. The battery pack case according to any one of claims 1 to 6, wherein at least one of the tray or the cover includes a fiber-reinforced plastic containing two or more fibers selected from the group consisting of glass fiber, aramid fiber, carbon fiber, ZYLON (registered trademark) fiber, polyethylene fiber, and boron fiber.

8. The battery pack case according to any one of claims 1 to 7, wherein:
the battery-holding member is a battery-module-holding member that holds a battery module in which a plurality of lithium secondary batteries are disposed one on another in layers in a thickness direction of the plurality of lithium secondary batteries,
the battery-module-holding member includes:
a pair of end plates for sandwiching the battery module from outer sides of both ends in the thickness direction in the battery module; and
a pair of side plates for sandwiching the battery module from outer sides of both ends in a direction perpendicular to the thickness direction in the battery module and to a vertical direction, and
the pair of end plates and the pair of side plates contain the fiber-reinforced plastic.

9. The battery pack case according to claim 8, wherein each of the pair of end plates is a plate-like member having a structure in which a metal member is embedded in the fiber-reinforced plastic.

10. The battery pack case according to claim 8 or 9, which further includes a shock-absorbing layer that is arranged at at least one of a position between the pair of end plates and the battery module or a position between the battery module and the tray.

11. A battery pack which is mounted at an electric vehicle, the battery pack comprising:
the battery pack case according to any one of claims 1 to 10; and
a battery that is held by the battery-holding member in the battery pack case.
